# EUROPEAN PATENT APPLICATION

(11) **EP 3 285 239 A1**
(43) Date of publication of application: **21.02.2018**
(21) Application number: 17184286.7
(22) Date of filing: 01.08.2017
(51) Int. Cl.: G08G 1/087, G08G 1/01

(54) **EMERGENCY COMMUNICATION SYSTEM FOR AUTOMATED VEHICLES**

(30) Priority: 19.08.2016 US 201615241414
(71) Applicant: Delphi Technologies, Inc., Troy, MI 48007-5052 (US)
(72) Inventor: WIESKAMP, Jonathan L, SANTA CLARA, CALIFORNIA 95051 (US); HEDGES, Christopher A, GREENTOWN, INDIANA 46936 (US)
(74) Representative: Aptiv

(57) **Abstract**

An emergency communication system (10) for automated-vehicles includes a transceiver (14) and a controller (20). The transceiver (14) is used to communicate messages (18) from and to an automated-vehicle (12) that is classified as a non-emergency-vehicle. The controller (20) is in communication with the transceiver (14). The controller (20) is configured to receive a request (24) for an emergency-certification (30) from the automated-vehicle (12) via the transceiver (14), determine when a circumstance exists that justifies the request (24), and grant (28) the request (24) when the circumstance exists. When the request (24) is granted, the automated-vehicle (12) is authorized to operate in a manner comparable to an emergency-vehicle.

## Description

### TECHNICAL FIELD OF INVENTION

This disclosure generally relates to an emergency communication system for automated vehicles, and more particularly relates to a system that grants a request for an emergency-certification when appropriate circumstance exists so an automated-vehicle is authorized to operate in a manner comparable to an emergency-vehicle.

### BACKGROUND OF INVENTION

In certain emergency situations, it may be faster to use a privately owned vehicle to transport an injured person to a medical center rather than waiting for an ambulance to arrive on scene as seconds can sometimes be the difference between life and death. However, privately owned vehicles generally do not have the privileges of typical emergency vehicles, which can increase the time for a person to receive emergency medical treatment when being transported in a privately owned vehicle.

### SUMMARY OF THE INVENTION

It has been proposed by the United States government that all vehicles be equipped with dedicated short range communication (DSRC) devices to enable vehicle-to-infrastructure (V2I) communications, vehicle-to-vehicle (V2V) communications, and/or vehicle-to-pedestrian (V2P) communications, which may be generically labeled as V2X communications. For vehicles equipped with DSRC/V2X communications, the emergency communication system described herein provides for certain authorities to authorize privately owned, i.e. non-emergency, vehicles to operate in an "emergency mode", which among other things authorized the authorized vehicle to transmit messages that are typically reserved for emergency service vehicles. These messages can, for example, warn other vehicles within close proximity and/or request priority at traffic signals. As such, the optional Part II Special Vehicle Extensions data frame of a Basic Safety Message (BSM) can be broadcast by a temporarily authorized for a private vehicle. The authorization may include a download of proper certificates from a United States Department of Transportation (USDOT) certificate authority, which could be performed over-the-air and facilitated by emergency dispatch and/or a telematics service provider such as ONSTAR®. It is contemplated that certificates will typically be short-lived and would expire the day of the emergency run.

Also described herein is a method to authorize private vehicles to broadcast emergency messages in certain circumstances to decrease travel times to a medical center. Proper security certificates are downloaded over-the-air from DOT Certificate Authority. A request for certificates can be made by: emergency dispatch during 911 call, telematics service such as ONSTAR®, and/or on-the-scene emergency personnel. It is also contemplated that civilian automated-vehicles can be commandeered for transport of non-critical casualties. This frees up ambulance space for those with critical injuries during major incidents. Alternatively, a non-injured person could drive the vehicle. If so equipped, an autonomous system can pilot the vehicle. Additional features of the system/method described herein include designating coordinates for an ambulance meet-up, which can be sent and navigated to by the vehicles involved.

In accordance with one embodiment, an emergency communication system for automated-vehicles is provided. The system includes a transceiver and a controller. The transceiver is used to communicate messages from and to an automated-vehicle that is classified as a non-emergency-vehicle. The controller is in communication with the transceiver. The controller is configured to receive a request for an emergency-certification from the automated-vehicle via the transceiver, determine when a circumstance exists that justifies the request, and grant the request when the circumstance exists. When the request is granted, the automated-vehicle is authorized to operate in a manner comparable to an emergency-vehicle.

The emergency-certification may authorize the automated-vehicle to demand traffic-signal-priority. The emergency-certification may authorize the automated-vehicle to ignore a traffic-signal directed toward the automated-vehicle when the traffic-signal is red. The emergency-certification may authorize the automated-vehicle to exceed a speed-limit. The emergency-certification may authorize the automated-vehicle to inform other vehicles that the automated vehicle is operating in a manner comparable to an emergency-vehicle. The automated vehicle may be equipped with an emergency-notification-device, and the emergency-certification may authorize the automated-vehicle to activate the emergency-notification-device. The emergency-certification may expire when the automated-vehicle arrives at a predetermined destination. The predetermined destination may be a hospital

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of an emergency communication system in accordance with one embodiment; and
Fig. 2 is a traffic scenario encountered by the system of Fig. 1 in accordance with one embodiment.

### DETAILED DESCRIPTION

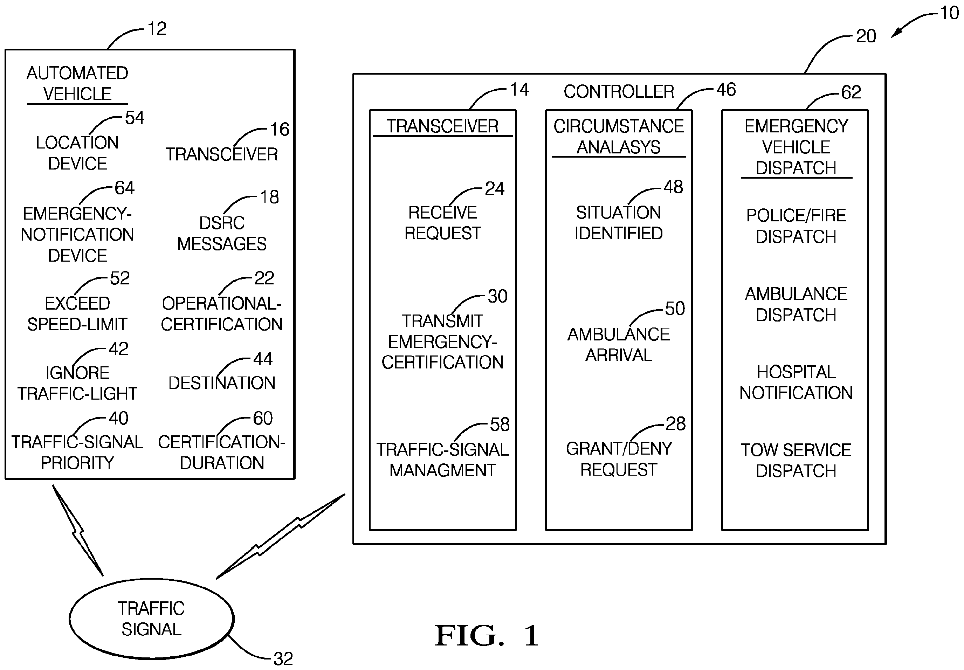

Fig. 1 illustrates a non-limiting example of an emergency communication system 10, hereafter referred to as the system 10, which is generally configured for by an automated-vehicle 12. While the examples presented herein may seem to be generally directed to instances when the automated-vehicle 12 is being operated in an automated-mode, i.e. a fully autonomous mode, where a human operator (not shown) of the automated-vehicle 12 does little more than designate a destination, it is contemplated that the teachings presented herein are useful when the automated-vehicle 12 is operated, or is only configured for operation, in a manual-mode. While in the manual-mode the degree or level of automation may be little more than, for example, illuminating an indicator when another vehicle is present in a so-called blind-spot of the automated-vehicle 12, providing turn-by-turn route guidance to a destination, or providing braking assistance to a human operator who is generally in control of the steering, accelerator, and brakes of the automated-vehicle 12. That is, the automation of the automated-vehicle may only, for example, assist the human operator with operation of the automated-vehicle 12, but not actually control any aspect of vehicle operation.

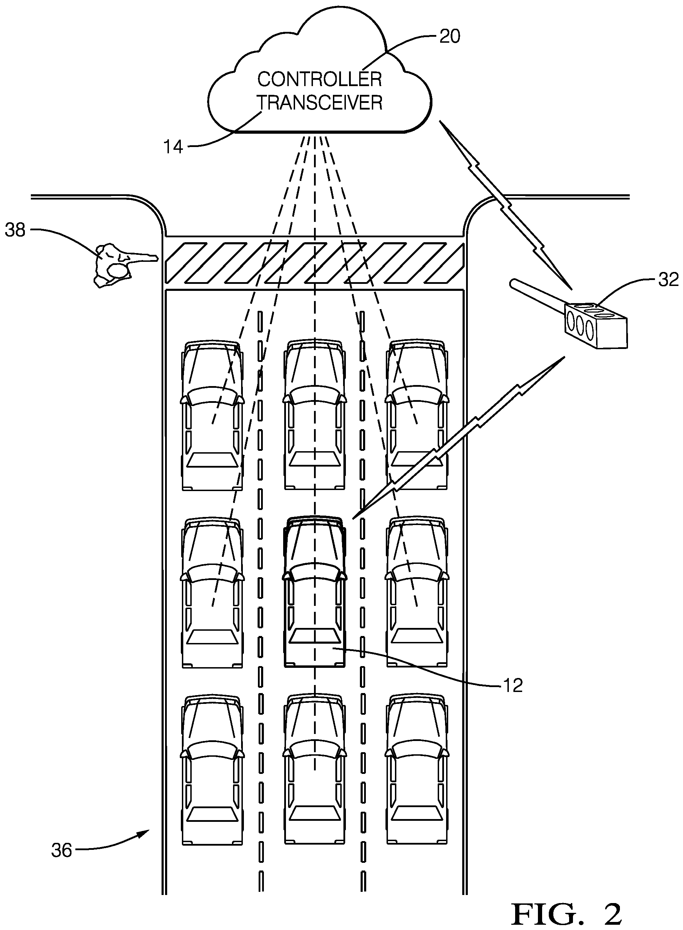

The system 10 includes a transceiver 14 such as a dedicated short range communication (DSRC) transceiver used to enable vehicle-to-infrastructure (V2I) and vehicle-to-vehicle (V2V) communications, where in this example the transceiver 14 is part of the infrastructure. The automated-vehicle 12 (as well as other vehicles, see Fig. 2) may also be equipped with a similar-transceiver 16 to enable V2I and V2V communications, as will be recognized by those in the art. It follows then that the transceiver 14 and the similar-transceiver 16 are used to communicate messages 18 (e.g. DSRC messages) from and to an automated-vehicle 12. At least initially for the discussion herein, the automated-vehicle 12 is characterized or classified as a non-emergency-vehicle, which may also be referred to as a privately owned vehicle elsewhere herein. That is, it is presumed that the automated-vehicle 12 is normally operated as a non-emergency-vehicle. While the automated-vehicle 12 is classified as a non-emergency-vehicle, it is generally illegal or improper for the automated-vehicle 12 to, for example, exceed a speed-limit or operate in any manner that is comparable to an emergency vehicle (e.g. police car, fire truck, ambulance) that is responding (i.e. traveling quickly) to an emergency situation such as a vehicle collision site, fire, or to provide emergency medical attention to a person.

The system 10 also includes a controller 20 in communication with the transceiver 14. The controller 20 may include a processor (not specifically shown) such as a microprocessor or other control circuitry such as analog and/or digital control circuitry including an application specific integrated circuit (ASIC) for processing data as should be evident to those in the art. The controller 20 may include memory (not specifically shown), including non-volatile memory, such as electrically erasable programmable read-only memory (EEPROM) for storing one or more routines, thresholds, and captured data. The one or more routines may be executed by the processor to perform steps for determining an operational-certification 22 (e.g. emergency-vehicle vs. non-emergency-vehicle) for the automated-vehicle 12 based on signals received by the controller 20 as described herein. In one envisioned embodiment the controller 20 is located remotely from the automated-vehicle 12, is configured to communicate with numerous vehicles, and operates 'in the cloud' as a centralized decision making device. Alternatively, the controller 20 may be one of many controllers interconnected via a network, where the controller 20 described herein may be located relatively close to the automated-vehicle 12 at any given time, for example mounted on or attached to a traffic signal 32 proximate to the present location of the automated-vehicle 12.

The controller 20 is generally configured to receive a request 24 for an emergency-certification 30 from the automated-vehicle 12 via the transceiver 14. The request 24 may originate from, but is not limited to, an operator (not shown) of the automated-vehicle 12, or a police officer or other person of authority (not shown) seeking to authorize or commandeer the automated-vehicle 12 for emergency use. The controller 20 may be equipped or programmed with a circumstance analysis block 26 that is configured to determine when a circumstance exists that justifies the request 24, and grant 28 the request when the circumstance exists. If the request 24 is granted, the transceiver 14 may transmit an emergency-certification 30 to the automated-vehicle 12, whereby the automated-vehicle 12 is authorized or allowed to operate in a manner comparable to an emergency-vehicle. The effect or privileges of the emergency-certification 30 will be explained in more detail below with examples, but can generally be characterized as being authorized to violate some traffic laws in order to more quickly reach a destination 44 such as a hospital (not shown).

The controller 20 may be configured or equipped with a circumstance analysis block 46 that is programmed or configured to determine if a situation justifies or warrants the granting of the request 24. For example, the controller 20 may receive video signal from traffic cameras (not shown) and may be configured to determine when a collision has occurred. Alternatively, V2I communications to the controller 20 from other vehicles may indicate that a vehicle collision has occurred. By way of further example, a police officer on-site or other authority viewing traffic cameras at a remote location may identify the location of a collision. That is, any of the above methods may be used to determine that a situation 48 has been identified where it may be advantageous or advisable to grant the emergency-certification 30 to the automated-vehicle 12 to, for example, transport an injured person to a particular instance of the destination 44 such as a hospital (not shown).

The decision to grant 28 or deny 56 the request 24 may be further based on other factors such as the time until an ambulance arrival 50 or the arrival of some other emergency assistance such as a policeman or fireman. For example, if an ambulance is on-route and expected to arrive in the next few minutes, it may be better to wait for the ambulance rather than transport an injured person in the automated-vehicle 12. It is further contemplated that the ability for the controller 20 to be able to deny 56 a request 24 is necessary to prevent individuals from requesting the emergency-certification 30 for unjustified reasons, for example just because traffic is slow. Accordingly, the automated-vehicle 12 may be equipped with a location device 54 (e.g. a global position system receiver or GPS receiver) so the circumstance analysis block 46 can determine if the automated-vehicle 12 is actually at the location of an accident, i.e. the situation 48.

Fig. 2 illustrates a non-limiting example of a traffic-scenario 34 where the automated-vehicle 12 is 'trapped' within a formation of other-vehicles 36 because the traffic-signal 32 is red and a pedestrian 38 is about to cross the travel-path of the automated-vehicle 12. Assuming for the moment that the automated-vehicle 12 has been previously granted the emergency-certification 30 so the operational-certification 22 of the automated-vehicle 12 is that of an emergency-vehicle, there are several ways contemplated that the automated-vehicle 12 may operate to 'escape the trap' formed by the other-vehicles 36. By way of example and not limitation, the emergency-certification 30 may be such that the emergency-certification 30 authorizes the automated-vehicle 12 to demand a traffic-signal-priority 40, i.e. request or order the traffic-signal 32 to change from red to green (i.e. turn off the red traffic-light and turn on the green traffic-light of the traffic-signal 32) to allow the other-vehicles 36 to proceed even though the programmed red-light duration that the traffic-signal 32 is supposed to remain red has not yet expired.

The demand or request for the traffic-signal-priority 40 may be communicated directly from the automated-vehicle 12 to the traffic-signal 32, or via the messages 18 sent to the controller 20. Of course, it is necessary to equip the traffic-signal 32 with some form appropriate form of transceiver or receiver so the traffic-signal 32 can be controlled by the automated-vehicle 12 and/or the controller 20. It is also contemplated that a WALK / DON'T WALK signal (not shown) direct toward the pedestrian 38 would be operated to DON'T WALK when the traffic-signal 32 is changed to green.

Alternatively, the emergency-certification 30 may authorize the automated-vehicle 12 to ignore 42 the traffic-signal 32 directed toward the automated-vehicle 12 when the traffic-signal 32 is red. If the automated-vehicle 12 was alone waiting for a red light, or was in the forward most row of the formation of other-vehicles 36 shown in Fig. 2, the automated-vehicle 12 could proceed even though the traffic-signal 32 is red, assuming that doing so would not interfere with moving cross-traffic (not shown) and/or endanger the pedestrian 38. It is also contemplated that the controller 20 may be equipped or programed to perform a traffic-signal-management 58 routine that operates the traffic-signal 32 and other traffic control devices (not shown) to assist the automated-vehicle 12 to reach the destination 44 when the operational-certification 22 of the automated-vehicle 12 is that of an emergency-vehicle.

By way of a further example, the emergency-certification 30 may authorize the automated-vehicle 12 to exceed a speed-limit 52. The emergency-certification may also operate the headlights and turn-signals of the automated-vehicle 12 in a flashing manner in order to get the attention of operators and/or other vehicles that did not or cannot receive an indication from the controller 20 that the automated-vehicle 12 is approaching while operating as an emergency vehicle. It is further contemplated that the automated-vehicle 12 may be equipped with an observable notification device such as one or more instances of a flashing colored light (not shown), e.g. red and blue lights, and/or a siren, the use of which requires that the emergency certification 30 has been issued. That is, the automated vehicle may be equipped with an emergency-notification-device 64, and the emergency-certification authorizes the automated-vehicle 12 to activate the emergency-notification-device 64.

Presently, V2V communications inform other vehicles with data such as a present location, direction of travel, and speed. An optional data element can indicate a vehicle as an emergency vehicle on an active run, i.e. traveling to an accident scent. The emergency-certification 30 authorizes the automated-vehicle 12 to add this data element to its V2V communications. As a result, the drivers of surrounding vehicles can be informed with in-vehicle indicators that the automated-vehicle 12 is within close proximity and is on an active emergency run. Additionally, the in-vehicle indicators of surrounding vehicles may convey the exact relative location of the emergency vehicle. As such, the emergency-certification 30 authorizes the automated-vehicle 12 to inform (i.e. broadcast to via V2V communications) the other vehicles 36 that the automated-vehicle 12 is operating in a manner comparable to that of an emergency-vehicle, e.g. police-car, ambulance, etc. It is contemplated that one of the effects is that actual police vehicles in the vicinity are informed that the automated-vehicle 12 is on an emergency run and should not be stopped if the automated-vehicle 12 is observed to be exceeding the speed-limit 52 and/or running a red light. Furthermore, it is contemplated that the other vehicles 36 may decide to, or be directed to, steer to the side of the road when they are made aware of the fact that the automated-vehicle 12 is on an authorized emergency run.

Returning to Fig. 1, it is contemplated that a certification-duration 60 that the emergency-certification 30 is valid is not indefinite. For example, the emergency-certification 30 may expire when the automated-vehicle 12 arrives at a predetermined instance of the destination 44, a hospital (not shown) or a meet-up location where an ambulance will be present, for example. Alternatively, the emergency-certification 30 may expire after a predetermine amount of time, two hours for example, or after the automated-vehicle 12 has been parked for more than an hour.

It is also contemplated that the controller 20 may be configured or programmed with an emergency vehicle dispatch 62 which may include dispatching and tracking police vehicles, fire/rescue vehicles, ambulances, and the like. The emergency vehicle dispatch 62 may also provide advance notification to hospital regarding the arrival time of an injured person traveling in the automated-vehicle 12. The emergency vehicle dispatch 62 may also dispatch a tow-truck to remove damaged vehicles at an accident site, and road repair/clean-up crews if necessary.

Accordingly, an emergency communication system (the system 10), a controller 20 for the system 10, and a method of operating the system 10 is provided. The system 10 and the method provide a way for automated vehicles to assist with transporting injured persons when waiting for an ambulance or other medical personal to arrive may take an unacceptable amount of time.

While this invention has been described in terms of the preferred embodiments thereof, it is not intended to be so limited, but rather only to the extent set forth in the claims that follow.

## Claims

1. An emergency communication system (10) for automated-vehicles, said system (10) comprising:
a transceiver (14) used to communicate messages (18) from and to an automated-vehicle (12) that is classified as a non-emergency-vehicle;
a controller (20) in communication with the transceiver (14), said controller (20) configured to receive a request (24) for an emergency-certification (30) from the automated-vehicle (12) via the transceiver (14), determine when a circumstance exists that justifies the request (24), and grant (28) the request (24) when the circumstance exists, whereby the automated-vehicle (12) is authorized to operate in a manner comparable to an emergency-vehicle.

2. The system (10) in accordance with claim 1, wherein the emergency-certification (30) authorizes the automated-vehicle (12) to demand traffic-signal-priority (40).

3. The system (10) according to any one of the preceding claims, wherein the emergency-certification (30) authorizes the automated-vehicle (12) to ignore a traffic-signal (32) directed toward the automated-vehicle (12) when the traffic-signal (32) is red.

4. The system (10) according to any one of the preceding claims, wherein the emergency-certification (30) authorizes the automated-vehicle (12) to exceed a speed-limit (52).

5. The system (10) according to any one of the preceding claims, wherein the emergency-certification (30) authorizes the automated-vehicle (12) to inform other vehicles (36) that the automated vehicle is operating in a manner comparable to an emergency-vehicle.

6. The system (10) according to any one of the preceding claims, wherein the automated vehicle is equipped with an emergency-notification-device (64), and the emergency-certification (30) authorizes the automated-vehicle (12) to activate the emergency-notification-device (64).

7. The system (10) according to any one of the preceding claims, wherein the emergency-certification (30) expires when the automated-vehicle (12) arrives at a predetermined destination (44).

8. The system (10) in accordance with claim 7, wherein the predetermined destination (44) is a hospital.
